# EUROPÄISCHE PATENTSCHRIFT

(11) **EP 2 347 142 B1**
(45) Veröffentlichungstag und Bekanntmachung des Hinweises auf die Patenterteilung: **23.05.2018**
(21) Anmeldenummer: 09737376.5
(22) Anmeldetag: 21.10.2009
(51) Int. Cl.: F16C 33/46, F16C 33/66

(54) **ROLLENLAGERKÄFIG**
ROLLER BEARING CAGE
CAGE DE ROULEMENT À ROULEAUX

(30) Priorität: 27.10.2008 DE 102008053313
(43) Veröffentlichungstag der Anmeldung: 27.07.2011
(73) Patentinhaber: AB SKF, 415 50 Göteborg (SE)
(72) Erfinder: BEYFUSS, Berthold, 97535 Kaisten (DE); FRIEDRICH, Hans-Jürgen, 97486 Königsberg-Römershofen (DE); FUCHS, Fred, 97422 Schweinfurt (DE); RADINA, Alfred, 97711 Poppenlauer (DE); SCHIERLING, Jonas, 97437 Hassfurt (DE)
(74) Vertreter: Kohl, Thomas
(86) Internationale Anmeldenummer: PCT/EP2009/007541
(87) Internationale Veröffentlichungsnummer: WO 2010/049085

(56) Entgegenhaltungen:
- EP-A1- 1 921 333
- WO-A1-2008/131924
- DE-A1-102006 027 692

## Beschreibung

Die Erfindung betrifft einen Rollenlagerkäfig.

Aus dem Stand der Technik sind eine Reihe von Maßnahmen bekannt, um bei geschmierten Wälzlagern mit Käfigen eine ausreichend Schmierstoffversorgung in Wälzkontakt-, aber auch im Gleitkontaktbereichen des Wälzlagers auch bei einer Lebensdauerschmierung sicherzustellen. Ein gattungsgemäßer Rollenlagerkäfig ist z.B. aus der EP 1 921 333 A1 bekannt.

Eine Aufgabe der vorliegenden Erfindung ist es, einen insbesondere hinsichtlich Schmierstoffversorgung verbesserten Rollenlagerkäfig zu schaffen.

Die Aufgabe wird durch den Gegenstand des Anspruchs 1 gelöst. Vorteilhafte Ausgestaltungen sind in den Unteransprüchen beschrieben.

Gemäß Anspruch 1 beinhaltet ein Rollenlagerkäfig folgende Merkmale:
- Wenigstens ein Stegelement mit einer zum unmittelbaren Gegenüberliegen einer Mantelfläche einer Rolle vorgesehenen Fläche,
   - die Fläche ist mit einer Mehrzahl schiffsrumpfähnlicher makroskopischer Vertiefungen für ein Halten eines Schmierstoffs ausgebildet,
   - die Vertiefungen sind in Umfangsrichtung der Rolle, hin zu wenigstens einem Ende in Umfangsrichtung, mit sich verkleinernder Breite und/oder Tiefe ausgebildet, und
   - auf der Fläche sind mehrere Vertiefungen angeordnet, von denen sich eine erste Gruppe im Wesentlichen hin zu einem der Enden und die zweite hin zum anderen Ende verkleinert, und
- die Vertiefungen sind sich zwischen 90 % und 50 % der Erstreckung der Fläche in Rollenumfangsrichtung erstrecked ausgebildet.

Die Erfindung beruht dabei auf der Erkenntnis, dass mit der erfindungsgemäßen Ausbildung eines Stegelements auch bei einer Lebensdauerschmierung eine ausreichende Schmierstoffversorgung des Rollenlagers unterstützt wird.

Dadurch, dass sich die Vertiefungen in Drehrichtung der Rolle in ihrer Breite und/oder Tiefe verkleinernd ausgebildet sind, wird bei Betrieb des Rollenlagers in den Vertiefungen gehaltener Schmierstoff aufgrund des innerhalb der Vertiefung sozusagen in Drehrichtung kontinuierlich sich verkleinernden Volumensabschnitten aus den Vertiefungen heraus, in die Drehrichtung der Rolle hinein gefördert, und damit der Schmierfilm günstig beeinflusst. Damit dies unabhängig von einer Drehrichtung des Rollenlagers funktioniert, sind hinsichtlich ihrer Verkleinerungsrichtung unterschiedliche Vertiefungen, in Längsrichtung des Stegelements insbesondere abwechselnd vorgesehen.

Weitere Vorteile, Merkmale und Einzelheiten der Erfindung ergeben sich aus den im Folgenden beschriebenen Ausführungsbeispielen der Erfindung anhand der Figuren. Dabei zeigen:
- Figur 1: in perspektivischer Ansicht einen Zylinderrollenlagerkäfig mit zwei Umfangselementen mit Einbauchungen für Stegelemente mit Vertiefungen,
- Figur 2: in perspektivischer Ansicht eines der Stegelemente der Figur 1 und
- Figur 3: in perspektivischer Ansicht ein alternatives Stegelement, und
- Figur 4: das Stegelement der Figur 3 in einer Draufsicht auf eine der dem Mantel einer der Zylinderrollen des Zylinderrollenlagers zum unmittelbaren Gegenüberliegen vorgesehenen Flächen inklusive zweier mit E-E und F-F bezeichneter Schnitte durch zwei benachbarte Vertiefungen.

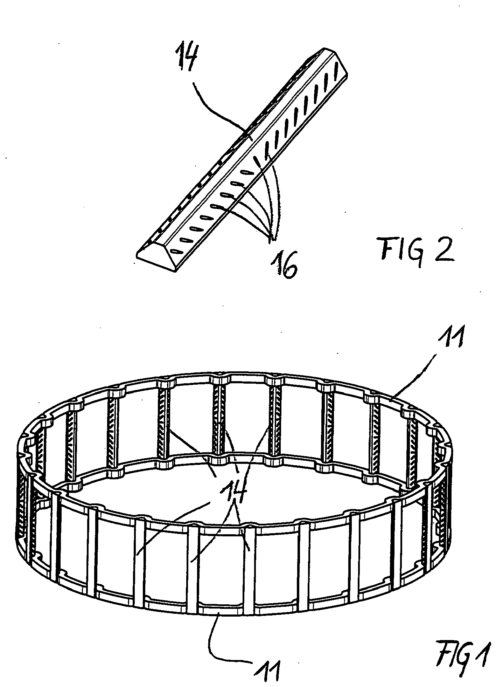

Die Figur 1 zeigt als in perspektivischer Ansicht einen Zylinderrollenlagerkäfig mit zwei Umfangselementen 11 mit Einbauchungen für Stegelemente 14 mit einem einheitlichen trapezförmigen Querschnitt. Dabei sorgen die Einbauchungen an den Umfangselementen 11 in Verbindung mit den entsprechend den Einbauchungen geformten Stegelementen 14 beim Zusammensetzen der Elemente 11 und 14 für eine Verschweißen der Stegelemente 14 an den Umfangselementen 11 für ein Vorpositionieren der Stegelemente 14 in Umfangsrichtung der Umfangselemente 11.

Dabei sind die Elemente 11 und 14 aus einem Eisenwerkstoff, insbesondere aus einem Stahldraht hergestellt. In anderen Ausführungsformen können aber auch andere Materialien zum Einsatz kommen und anstelle eines Verschweißens auch ein Löten oder Kleben treten. Weiterhin können insbesondere auch die Stegelemente 14 zum Erzielen eines besonderen Gleitverhaltens, insbesondere im Bereich ihrer Kontaktflächen hin zu den Wälzkörpern, mit einer Beschichtung ausgebildet sein.

Die Stegelemente 14 sind dabei an ihren, den Rollenmänteln zum unmittelbaren Gegenüberliegen vorgesehenen Flächen, mit Vertiefungen 16 für ein Halten eines Schmierstoffs versehen. Dabei sind die Vertiefungen 16 schiffsrumpfartig, man kann auch sagen tropfenförmig ausgebildet.

Die Figur 2 zeigt eine vergrößerte perspektivische Darstellung eines der Stegelemente 14 mit den Vertiefungen 16. Die Vertiefungen 16 sind dabei in einer linken axialen Hälfte der Stegelemente 14 schräg, parallel zu einer vom rechten Käfigbereich schräg zum Käfigmittelpunkt hin verlaufenden Linie angeordnet, in der rechten Hälfte entsprechend spiegelbildlich ausgebildet und in der Mitte ist eine Vertiefung 16 radial orientiert.

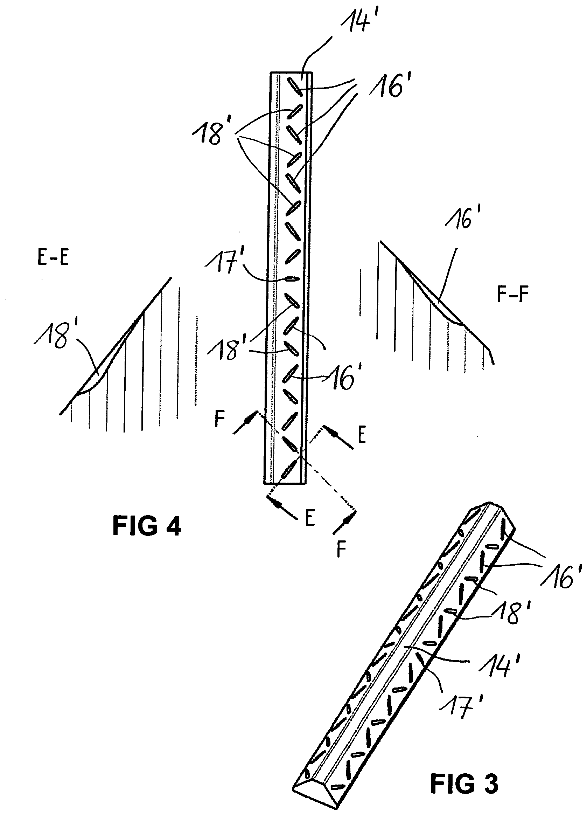

Die Figur 3 zeigt als ein Ausführungsbeispiel der Erfindung in perspektivischer Ansicht ein Stegelement 14', das eine Alternative zu dem Stegelement 14 der Figuren 1 und 2 darstellt. Die Figur 4 zeigt das Stegelement 14' der Figur 3 in einer Draufsicht auf eine der dem Mantel einer der Zylinderrollen des Zylinderrollenlagers zum unmittelbaren Gegenüberliegen vorgesehenen Flächen inklusive zweier mit E-E und F-F bezeichneter Schnitte durch zwei benachbarte Vertiefungen 16' und 18'.

Besagte Fläche des Stegelements umfasst dabei dreierlei Arten von schiffsrumpfartigen Vertiefungen 16', 17' und 18'. Alle Vertiefungen 16', 17' sind dabei übereinstimmend derart ausgebildet, dass sie in Umfangsrichtung der Rolle im Wesentlichen hin zu einem Ende in Umfangsrichtung eine sich verkleinernde Breite und Tiefe aufweisen. Bezugnehmend auf die mittlere Abbildung der Figur 4 verkleinern sich die Vertiefungen 16' und 17' sozusagen im Wesentlichen zur rechten Seite hin und die Vertiefungen 18' zur linken Seite hin. Die Vertiefungen 16' und 18' sind dabei mit ihrer Längserstreckung schräg zur Umfangsrichtung der Rolle ausgerichtet sind, wobei die Vertiefungen 16' gegenüber den Vertiefungen 18' um einen gleichen spitzen Winkel gegenüber besagter Umfangsrichtung allerdings in entgegensetzte Richtungen geneigt sind. Beiderseits der Vertiefungen 17' sind die Vertiefungen 16' zwar mit gleichem Winkel, aber in entgegensetzte Richtung geneigt, was auch für die Vertiefungen 18' gilt. Nur die Vertiefung 17' ist tangential in Umfangsrichtung der Rolle ausgerichtet. Die Vertiefung 16' und 18' sind abwechselnd und bezüglich der der Vertiefung 17' achsensymmetrisch angeordnet.

In Abhängigkeit von der Zylinderrollengröße bewegt sich die Tiefe der Vertiefungen 16', 17' und 18' im Bereich weniger Zehntel Millimeter bis hin zu wenigen Millimetern, wobei die Vertiefungen 16', 17' und 18' über einen Gutteil, erfindungsgemäß zwischen 90 % und 50 % der Erstreckung der Fläche in Rollenumfangsrichtung erstreckend ausgebildet sind.

## Patentansprüche

1. Rollenlagerkäfig, beinhaltend folgende Merkmale:
- Wenigstens ein Stegelement mit einer zum unmittelbaren Gegenüberliegen einer Mantelfläche einer Rolle vorgesehenen Fläche,
- die Fläche ist mit einer Mehrzahl schiffsrumpfähnlicher makroskopischer Vertiefungen für ein Halten eines Schmierstoffs ausgebildet,
- die Vertiefungen sind in Umfangsrichtung der Rolle, hin zu wenigstens einem Ende in Umfangsrichtung, mit sich verkleinernder Breite und/oder Tiefe ausgebildet,
- auf der Fläche sind mehrere Vertiefungen angeordnet, von denen sich eine erste Gruppe im Wesentlichen hin zu einem der Enden und die zweite hin zum anderen Ende verkleinert, **dadurch gekennzeichnet, dass**
- die Vertiefungen sich zwischen 90 % und 50 % der Erstreckung der Fläche in Rollenumfangsrichtung erstreckend ausgebildet sind.

2. Rollenlagerkäfig nach Anspruch 1, wobei die sich derart unterschiedlich verkleinernden Vertiefungen in Längsrichtung des Stegelements abwechselnd angeordnet sind.

3. Rollenlagerkäfig nach einem der Ansprüche 1 oder 2, wobei die Vertiefungen mit ihrer Längserstreckung tangential oder schräg zur Umfangsrichtung der Rolle ausgerichtet sind.

4. Rollenlagerkäfig nach Anspruch 3, wobei unterschiedlich ausgerichtete Vertiefungen bezogen auf eine Mitte des Stegelements symmetrisch angeordnet sind.

5. Rollenlagerkäfig nach einem der Ansprüche 1 bis 4, wobei die Tiefe der Vertiefungen größer in etwa 0,05 mm, insbesondere größer in etwa 0,1 mm ist.

6. Rollenlagerkäfig nach einem der Ansprüche 1 bis 5, wobei mehrere Stegelemente stoffschlüssig mit wenigstens einem ringartigen Umfangselement des Käfigs verbunden sind.

7. Rollenlagerkäfig nach Anspruch 6, wobei für ein bestimmungsgemäßes Inpositionbringen der Elemente zueinander für das stoffschlüssige Verbinden die Elemente derart mit einer aufeinander abgestimmten Formgebung ausgebildet sind, dass die Positionen der Stegelemente am Umfangselement in Umfangsrichtung und/oder in Achsrichtung des Umfangselements vorbestimmt ist.

8. Rollenlagerkäfig nach einem der Ansprüche 6 oder 7, wobei die Elemente einen Eisenwerkstoff und das stoffschlüssige Verbinden ein Verschweißen umfassen.

9. Rollenlagerkäfig nach einem der Ansprüche 6 bis 8, wobei das Umfangselement einerseits und die Stegelemente andererseits mit unterschiedlichen Eigenschaften ausgebildet sind.

10. Rollenlagerkäfig nach einem der Ansprüche 1 bis 9, wobei eine Querschnittsfläche wenigstens eines Abschnitts eines der Stegelemente trapezförmig ist.

11. Rollenlagerkäfig nach Anspruch 10, wobei die Seiten des Trapezes in Anpassung an die Rollen bogenartig ausgebildet sind.

12. Rollenlagerkäfig nach einem der Ansprüche 1 bis 11, wobei die Stegelemente von einem entsprechend profilierten Stangen- oder Bandmaterial abgelängt sind.

13. Rollenlagerkäfig nach einem der Ansprüche 1 bis 12, wobei der Rollenlagerkäfig insbesondere für ein Zylinder-, Kegel- oder Pendelrollenlager ausgebildet ist.

## Claims

1. Roller bearing cage, comprising the following features:
- at least one web element with a face which is provided for lying directly opposite a circumferential face of a roller,
- the face is configured with a plurality of hull-like macroscopic depressions for holding a lubricant,
- the depressions are configured with a diminishing width and/or depth in the circumferential direction of the roller, towards at least one end in the circumferential direction,
- a plurality of depressions are arranged on the face, of which depressions a first group diminishes substantially towards one of the ends and the second diminishes towards the other end, **characterized in that**
- the depressions are configured so as to extend over between 90% and 50% of the extent of the face in the roller circumferential direction.

2. Roller bearing cage according to Claim 1, the depressions which diminish differently in this way being arranged so as to alternate in the longitudinal direction of the web element.

3. Roller bearing cage according to either of Claims 1 and 2, the depressions being oriented with their longitudinal extent tangentially or obliquely with respect to the circumferential direction of the roller.

4. Roller bearing cage according to Claim 3, depressions which are oriented differently being arranged symmetrically in relation to a centre of the web element.

5. Roller bearing cage according to one of Claims 1 to 4, the depth of the depressions being greater than approximately 0.05 mm, in particular greater than approximately 0.1 mm.

6. Roller bearing cage according to one of Claims 1 to 5, a plurality of web elements being connected in an integrally joined manner to at least one ring-like circumferential element of the cage.

7. Roller bearing cage according to Claim 6, the elements being configured with a shape which is adapted to one another for positioning as intended of the elements with respect to one another for the integrally joined connection, in such a way that the positions of the web elements on the circumferential element are predefined in the circumferential direction and/or in the axial direction of the circumferential element.

8. Roller bearing cage according to either of Claims 6 and 7, the elements comprising an iron material and the integrally joined connection comprising a welded joint.

9. Roller bearing cage according to one of Claims 6 to 8, the circumferential element on one side and the web elements on the other side being configured with different properties.

10. Roller bearing cage according to one of Claims 1 to 9, a cross-sectional face of at least one section of one of the web elements being trapezium-shaped.

11. Roller bearing cage according to Claim 10, the sides of the trapezium being of curved configuration in a manner which is adapted to the rollers.

12. Roller bearing cage according to one of Claims 1 to 11, the web elements being cut to length from a correspondingly profiled bar or strip stock.

13. Roller bearing cage according to one of Claims 1 to 12, the roller bearing cage being configured, in particular, for a cylindrical roller bearing, a tapered roller bearing or a self-aligning roller bearing.

## Revendications

1. Cage pour palier de roulement, présentant les caractéristiques suivantes :
au moins un élément de traverse qui présente une surface prévue pour être située directement en face de la surface d'enveloppe d'un rouleau,
la surface est configurée avec plusieurs creux macroscopiques en forme de coque de navire et destinés à retenir un lubrifiant,
les creux sont formés à une largeur et/ou une profondeur qui diminuent dans la direction périphérique du rouleau jusqu'à au moins une extrémité dans la direction périphérique,
plusieurs creux parmi lesquels un premier groupe diminue essentiellement jusqu'à l'une des extrémités et le deuxième jusqu'à l'autre extrémité sont disposés sur la surface,
**caractérisée en ce que**
les creux sont configurés de manière à s'étendre sur 90 % à 50 % de l'extension de la surface dans la direction périphérique du rouleau.

2. Cage pour palier de roulement selon la revendication 1, dans laquelle les creux qui diminuent différemment dans le sens de la longueur de l'élément de traverse sont disposés en alternance.

3. Cage pour palier de roulement selon l'une des revendications 1 ou 2, dans laquelle l'extension longitudinale des creux est alignée tangentiellement ou obliquement par rapport à la direction périphérique des rouleaux.

4. Cage pour palier de roulement selon la revendication 3, dans laquelle des creux orientés différemment sont disposés symétriquement par rapport au milieu de l'élément de traverse.

5. Cage pour palier de roulement selon l'une des revendications 1 à 4, dans laquelle la profondeur des creux est supérieure à environ 0,05 mm et en particulier supérieure à environ 0,1 mm.

6. Cage pour palier de roulement selon l'une des revendications 1 à 5, dans laquelle plusieurs éléments de traverse sont reliés en correspondance de matière à au moins un élément périphérique annulaire de la cage.

7. Cage pour palier de roulement selon la revendication 6, dans laquelle les éléments présentent des formes accordées mutuellement en vue d'amener les éléments en une position mutuelle qui convient pour une liaison des éléments en correspondance de matière, de telle sorte que la position des éléments de traverse sur l'élément périphérique dans la direction périphérique et/ou dans la direction axiale de l'élément périphérique est prédéterminée.

8. Cage pour palier de roulement selon l'une des revendications 6 ou 7, dans laquelle les éléments comprennent un matériau à base de fer et la liaison en correspondance de matière un soudage.

9. Cage pour palier de roulement selon l'une des revendications 6 à 8, dans laquelle l'élément périphérique d'une part et les éléments de traverse d'autre part présentent des propriétés différentes.

10. Cage pour palier de roulement selon l'une des revendications 1 à 9, dans laquelle la surface de la section transversale d'au moins une partie de l'un des éléments de traverse est trapézoïdale.

11. Cage pour palier de roulement selon la revendication 10, dans laquelle les côtés du trapèze sont incurvés pour s'adapter aux rouleaux.

12. Cage pour palier de roulement selon l'une des revendications 1 à 11, dans laquelle les éléments de traverse sont découpés dans un matériau en tringle ou en bande profilé de manière appropriée.

13. Cage pour palier de roulement selon l'une des revendications 1 à 12, dans laquelle la cage de palier de roulement est configurée en particulier pour un palier de roulement cylindrique, conique ou pendulaire.
